# EUROPÄISCHE PATENTSCHRIFT

(11) **EP 3 865 280 B1**
(45) Veröffentlichungstag und Bekanntmachung des Hinweises auf die Patenterteilung: **14.08.2024**
(21) Anmeldenummer: 21162374.9
(22) Anmeldetag: 20.12.2017
(51) Int. Cl.: B29C 64/106, B29C 64/386, B33Y 50/02, B28B 1/00, E04G 21/04

(54) **GENERATIVE HERSTELLUNG VON FORMKÖRPERN AUS AUSHÄRTBAREN MATERIALEN**
GENERATIVE PRODUCTION OF MOULDED ARTICLES MADE FROM HARDENABLE MATERIALS
FABRICATION ADDITIVE DE CORPS MOULÉS EN MATÉRIAUX DURCISSABLES

(30) Priorität: 21.12.2016 EP 16205853
(43) Veröffentlichungstag der Anmeldung: 18.08.2021
(62) Teilanmeldung aus: 17818572.4
(73) Patentinhaber: Sika Technology AG, 6340 Baar (CH)
(72) Erfinder: Lootens, Didier, 8700 Küsnacht (CH); Brühwiler, Armin, 9606 Bütschweil (CH); Bourquin, Raphael, 8617 Mönchaltorf (CH)
(74) Vertreter: Sika Patent Attorneys

(56) Entgegenhaltungen:
- WO-A1-2013/064826
- WO-A1-2014/121917
- US-A1- 2009 101 278
- US-A1- 2014 284 832
- US-A1- 2016 107 332
- WANGLER TIMOTHY ET AL: "Digital Concrete: Opportunities and Challenges", RILEM TECHNICAL LETTERS, vol. 1, 1 January 2016 (2016-01-01), pages 67 - 75, XP055889032

## Beschreibung

### Technisches Gebiet

Die Erfindung betrifft ein Verfahren zur Herstellung eines Formkörpers aus einer mineralischen Bindemittelzusammensetzung, wobei das aushärtbare Material in einem generativen Freiraumverfahren, durch einen in wenigstens einer Raumrichtung bewegbaren Druckkopf schichtweise aufgetragen wird.

### Stand der Technik

Die Herstellung von Formkörpern durch generative Fertigungsverfahren gewinnt in sämtlichen Technologiebereichen zunehmend an Bedeutung. Der Begriff "generatives Fertigungsverfahren" bzw. "generative Fertigung" bezeichnet dabei Verfahren, bei welchen durch gezielte räumliche Ablagerung, Aufbringung und/oder Verfestigung von Material ein räumliches Objekt bzw. ein Formkörper erzeugt wird.

Die Ablagerung, Aufbringung und/oder Verfestigung des Materials erfolgt dabei insbesondere anhand eines Datenmodells des zu erzeugenden Objekts und insbesondere lage- oder schichtweise. Jedes Objekt wird im generativen Fertigungsverfahren typischerweise aus einer oder mehreren Lagen hergestellt. Üblicherweise wird zur Fertigung eines Objekts ein formloses Material (z.B. Flüssigkeiten, Pulver, Granulate, etc.) und/oder ein formneutrales Material (z.B. Bänder, Drähte) verwendet, welches insbesondere chemischen und/oder physikalischen Prozessen (z.B. Schmelzen, Polymerisieren, Sintern, Aushärten) unterzogen wird. Generative Fertigungsverfahren werden unter anderem auch als "Additive Fertigungsverfahren", "Additive Manufacturing" oder "3D-Druck" bezeichnet.

Die WO 2016/095888 A1 (Voxeljet AG) beschreibt beispielsweise ein Verfahren zum Herstellen von dreidimensionalen Formteilen mittels Schichtaufbautechnik. Die Formteile können z.B. als Gussformen, insbesondere für Beton- oder Polymergussverfahren, oder als Skulpturen oder Einbauteilelemente verwendet werden. Dabei wird partikelförmiges Baumaterial mittels Beschichter in einer definierten Schichtstärke auf ein Baufeld aufgetragen und über einen Druckkopf Binderflüssigkeit selektiv auf das Baumaterial aufgetragen, wobei die Binderflüssigkeit aufgrund eines in den Partikeln eingebrachten Aktivators polymerisiert wird. Sodann wird das Baufeld um die Schichtstärke abgesenkt oder der Beschichter um eine Schichtstärke angehoben und es werden in der gleichem Weise weitere Schichten hergestellt, bis das gewünschte Formteil erzeugt ist. Derartige Pulverbett-basierten Druckverfahren sind zwar für gewisse Anwendungen geeignet, oftmals aber relativ aufwändig und auf spezielle Materialien beschränkt. Das Dokument Wangler Timothy ET AL: "Digital Concrete: Opportunities and Challenges",RILEM Technical Letters, Bd. 1, 1. Januar 2016 (2016-01-01), Seiten 67-75, offenbart ein Verfahren gemäß dem Oberbegriff des Anspruchs 1.

Im Baubereich wird seit einiger Zeit ebenfalls versucht, geometrisch anspruchsvolle Bauelemente wie beispielsweise Betonelemente mit generativen Verfahren herzustellen. Dies ist zwar bis zu einem gewissen Grad möglich. Die physikalischen und chemischen Eigenschaften von Betonmischungen erschweren aber die generative Herstellung von Formkörpern aus Beton stark. Aufgrund der Kinetik während dem Aushärtevorgang und den thixotropen Eigenschaften der Betonzusammensetzungen ist insbesondere die Herstellgeschwindigkeit von Betonelementen mit generativen Herstellverfahren stark limitiert.

Es besteht deshalb weiterhin das Bedürfnis nach neuen und verbesserten Lösungen, welche die vorstehend genannten Nachteile möglichst überwinden.

### Darstellung der Erfindung

Aufgabe der vorliegenden Erfindung ist es daher, verbesserte Verfahren zur gezielten Herstellung von Formkörpern zu schaffen. Die Verfahren sollen insbesondere eine effiziente, zuverlässige und möglichst rasche Herstellung von Formkörpern aus aushärtbaren Materialen, insbesondere aus mineralischen Bindemittelzusammensetzungen, ermöglichen. Dies nach Möglichkeit ohne die Qualität oder Festigkeit der Formkörper zu beeinträchtigen. Zudem sollen entsprechende Vorrichtungen bereitgestellt werden, welche das Erreichen dieser Ziele effektiv ermöglichen.

Überraschenderweise wurde gefunden, dass die erfindungsgemässe Aufgabe im Hinblick auf das Verfahren durch ein Verfahren zur Herstellung eines Formkörpers aus einem aushärtbaren Material gemäss Anspruch 1 gelöst werden kann.

Die Lösung besteht demnach in einem Verfahren zur Herstellung eines Formkörpers aus einem aushärtbaren Material in Form einer mineralischen Bindemittelzusammensetzung, wobei das aushärtbare Material in einem generativen Freiraumverfahren, durch einen in wenigstens einer Raumrichtung bewegbaren Druckkopf schichtweise aufgetragen wird und wobei eine Höhe einer einzelnen Schicht 0.1 - 10 cm beträgt und wobei eine Auftragsrate des aushärtbaren Materials und die zeitliche Festigkeitsentwicklung des aushärtbaren Material aufeinander abgestimmt werden, wobei die Auftragsrate des aushärtbaren Materials mit zunehmender Schichtanzahl verändert wird und wobei eine Bewegungsgeschwindigkeit des Druckkopfs in Abhängigkeit der zeitlichen Festigkeitsentwicklung des aushärtbaren Materials eingestellt wird.

Wie sich gezeigt hat, können durch das erfindungsgemässe Verfahren in zuverlässiger Art und Weise und bei minimalem Zeitbedarf Formkörper ausgehend von aushärtbaren Materialien hergestellt werden. Das Verfahren ist darüber hinaus universell einsetzbar und wird mit mineralischen Bindemittelzusammensetzungen, durchgeführt.

Überraschenderweise hat sich zudem gezeigt, dass aufgrund des erfindungsgemässen Verfahrens die Qualität der hergestellten Formkörper in vielen Fällen verbessert werden kann. Ohne an eine Theorie gebunden zu sein, wird davon ausgegangen, dass dies auf die erfindungsgemässe Abstimmung der Auftragsrate und der zeitlichen Festigkeitsentwicklung des aushärtbaren Materials zurückzuführen ist. Damit lässt sich im Besonderen die Festigkeit und Qualität des Formkörpers insgesamt verbessern.

Die erfindungsgemässe Abstimmung oder Synchronisation zwischen der Auftragsrate und der zeitlichen Festigkeitsentwicklung ermöglicht zudem eine schnellst mögliche Herstellung des Formkörpers. Dies weil auf unnötig lange Wartezeiten bei der Auftragung von aufeinander folgenden Schichten verzichtet werden kann. Bei herkömmlichen Systemen wird typischerweise nach jeder Schicht eine Wartezeit eingeplant, bevor die nächste Schicht aufgetragen wird oder es muss eine reduzierte Auftragsrate gewählt werden. Die Wartezeit bzw. die Reduktion der Auftragsrate müssen dabei grosszügig bemessen werden und ausreichende Sicherheitsreserven beinhalten, da die von den Umgebungsbedingungen abhängige zeitliche Festigkeitsentwicklung des aushärtbaren Materials nicht mitberücksichtigt wird. Ansonsten besteht im Besonderen die Gefahr, dass sich unten liegende Schichten des Formkörpers durch die Last der darüber aufgebrachten Schichten verformen. Dies führt einerseits zu Totzeit, welche die Verfahren verlangsamen und erhöht andererseits das Risiko, dass die Festigkeit oder Qualität des Formkörpers reduziert wird. Die mit herkömmlichen Verfahren verbundene Totzeit kann durch die erfindungsgemässe Abstimmung dagegen eliminiert werden, ohne dass die Gefahr der Verformung von Schichten oder eine Beeinträchtigung der Haftung zwischen benachbarten Schichten besteht.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

In einem ersten Aspekt betrifft die Erfindung ein Verfahren zur Herstellung eines Formkörpers aus einem aushärtbaren Material in Form einer mineralischen Bindemittelzusammensetzung, wobei das aushärtbare Material in einem generativen Freiraumverfahren, durch einen in wenigstens einer Raumrichtung bewegbaren Druckkopf schichtweise aufgetragen wird und wobei eine Höhe einer einzelnen Schicht 0.1 - 10 cm beträgt und wobei eine Auftragsrate des aushärtbaren Materials und die zeitliche Festigkeitsentwicklung des aushärtbaren Material aufeinander abgestimmt werden, wobei die Auftragsrate des aushärtbaren Materials mit zunehmender Schichtanzahl verändert wird und wobei eine Bewegungsgeschwindigkeit des Druckkopfs in Abhängigkeit der zeitlichen Festigkeitsentwicklung des aushärtbaren Materials eingestellt wird.

Beim generativen Verfahren wird insbesondere eine einzelne Schicht durch gezielte Ablagerung, Aufbringung oder Auftragung von aushärtbarem Material aufgebaut und anschliessend auf die so hergestellte Schicht in der gleichen Weise eine nächste Schicht aufgebracht. Dies wird solange wiederholt, bis der Formkörper fertig aufgebaut ist.

Als "Auftragsrate" ist vorliegend die pro Zeiteinheit aufgetragen Höhe des aushärtbaren Materials zu verstehen. Die Höhe wird typischerweise in einer Richtung im Wesentlichen senkrecht zu den durch einzelne Schichten gebildeten Ebenen gemessen. Im Besonderen wir die Höhe in vertikaler Richtung gemessen.

Eine Höhe einer einzelnen Schicht beträgt 0.1 - 10 cm, bevorzugt 0.5 - 5 cm oder 1 - 2 cm. Eine Gesamthöhe des Formkörpers oder die Dicke aller Einzelschichten des Formkörpers zusammengenommen beträgt beispielsweise 1 cm - 1'000 cm, bevorzugt 10 cm - 500 cm, im Besonderen 50 cm - 300 cm oder 100 cm - 200 cm. Unter der "zeitlichen Festigkeitsentwicklung des aushärtbaren Materials" ist vorliegend die Festigkeitsentwicklung des konkret im Verfahren eingesetzten aushärtbaren Materials und im Besonderen unter den vorliegenden Umgebungsbedingungen zu verstehen. Die zeitliche Festigkeitsentwicklung des aushärtbaren Materials wird insbesondere in einem Zeitraum von 0.1 - 1'000 Minuten, bevorzugt 0.1 - 100 Minuten, besonders bevorzugt 0.1 - 10 Minuten, nach dem Austritt des aushärtbaren Materials aus dem Druckkopf bestimmt. Die dabei bestimmten Festigkeitswerte entsprechen im Besonderen der Festigkeit, insbesondere der Druckfestigkeit, des aushärtbaren Materials zu definierten Zeitpunkten nach dem Anmachen des aushärtbaren Materials und/oder nach dem Austritt des aushärtbaren Materials aus dem Druckkopf. Die definierten Zeitpunkte liegen insbesondere in einem Bereich von 0.1 - 1'000 Minuten, bevorzugt 0.1 - 100 Minuten, besonders bevorzugt 0.1 - 10 Minuten, nach dem Anmachen des aushärtbaren Materials und/oder dem Austritt des aushärtbaren Materials aus dem Druckkopf.

Ein "aushärtbares Material" steht für ein Material, welches typischerweise fliessfähig oder verflüssigbar ist und nach dem Anmachen, beispielsweise durch die Zugabe von Anmachwasser oder durch das Vermischen von Komponenten oder durch Erwärmung, durch eine chemischen Reaktion zu einem Feststoff aushärten kann. Beispielsweise handelt es sich um Reaktionsharze, mineralische Bindemittel, mineralische Bindemittelzusammensetzungen oder Mischungen davon.

Reaktionsharze sind insbesondere flüssige oder verflüssigbare Kunstharze, welche durch Polymerisation oder Polyaddition zu Duromeren aushärten. Beispielsweise können ungesättigte Polyesterharze, Vinylesterharze, Acrylharze, Epoxidharze, Polyurethanharze und/oder Siliconharze eingesetzt werden.

Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (z.B. Gips oder Weisskalk) sein.

Eine "mineralische Bindemittelzusammensetzung" ist entsprechend eine Zusammensetzung enthaltend mindestens ein mineralisches Bindemittel. Diese enthält vorliegend insbesondere das Bindemittel, Aggregate und optional eines oder mehrere Zusatzmittel. Als Aggregate können z.B. Gesteinskörnungen, Kies, Sand (in natürlicher und/oder bearbeiteter (z.B. gebrochener) Form) und/oder Füller vorliegen. Die mineralische Bindemittelzusammensetzung liegt insbesondere als eine mit Anmachwasser angemachte fluide Bindemittelzusammensetzung vor.

Unter einem "zementösen Bindemittel" oder einer "zementösen Bindemittelzusammensetzung" wird vorliegend insbesondere ein Bindemittel oder eine Bindemittelzusammensetzung mit einem Anteil von wenigstens 5 Gew.-%, insbesondere wenigstens 20 Gew.-%, bevorzugt wenigstens 35 Gew.-%, im Speziellen wenigstens 65 Gew.-%, Zementklinker verstanden. Der Zementklinker ist bevorzugt ein Portlandzementklinker und/oder Calcium-Sulfo-Aluminat-Zementklinker, im Besonderen ein Portlandzementklinker. Mit Zementklinker ist im vorliegenden Zusammenhang insbesondere gemahlener Zementklinker gemeint.

Insbesondere enthält das mineralische Bindemittel oder die Bindemittelzusammensetzung ein hydraulisches Bindemittel, bevorzugt Zement. Besonders bevorzugt ist ein Zement mit einem Zementklinkeranteil von ≥ 35 Gew.-%, insbesondere ist der Zement vom Typ CEM I, II, III, IV oder V, bevorzugt Zement vom Typ CEM I (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht das mineralische Bindemittel zu wenigstens 95 Gew.-% aus hydraulischem Bindemittel, insbesondere aus Zementklinker.

Es kann aber auch vorteilhaft sein, wenn die Bindemittelzusammensetzung zusätzlich oder anstelle eines hydraulischen Bindemittels andere Bindemittel enthält. Dies sind insbesondere latent hydraulische Bindemittel und/oder puzzolanische Bindemittel. Geeignete latenthydraulische und/oder puzzolanische Bindemittel sind z.B. Schlacke, Hüttensand, Flugasche und/oder Silicastaub. Ebenso kann die Bindemittelzusammensetzung inerte Stoffe wie z.B. Kalksteinmehl, Quarzmehl und/oder Pigmente enthalten. In einer vorteilhaften Ausführungsform enthält das mineralische Bindemittel 5 - 95 Gew.-%, insbesondere 5 - 65 Gew.-%, im Speziellen 15 - 35 Gew.-%, latenthydraulische und/oder puzzolanische Bindemittel.

Der mit dem erfindungsgemässen Verfahren hergestellte Formkörper kann nahezu jede beliebige Form aufweisen und beispielsweise ein Fertigteil für ein Bauwerk, z.B. für ein Gebäude, ein Mauerwerk und/oder eine Brücke, sein.

Vorteilhafte Ausgestaltungen des Druckkopfs und weitere die Vorrichtung betreffende Merkmale, welche sich für das erfindungsgemässe Verfahren im Besonderen eignen, sind weiter unten im Zusammenhang mit dem zweiten Aspekt der vorliegenden Erfindung beschrieben.

Beim erfindungsgemässen Verfahren handelt es sich um ein generatives Freiraumverfahren. Dies bedeutet, dass der Formkörper schichtweise entsteht, und zwar indem nur an denjenigen Stellen aushärtbares Material aufgebracht wird, wo der Formkörper entstehen soll. Bei Überhängen und/oder Hohlräumen kann optional eine Stützkonstruktion vorgesehen werden. Im Gegensatz dazu wird beispielsweise bei Pulverbettverfahren oder Flüssigverfahren typischerweise der gesamte Bauraum ausgefüllt und anschliessend selektiv eine Verfestigung des Materials an den gewünschten Stellen erwirkt. Freiraumverfahren haben sich vorliegend im Zusammenhang mit der Herstellung von Formkörpern aus aushärtbaren Materialen als besonders vorteilhaft erwiesen.

Gemäss einer bevorzugten Ausführungsform wir die Auftragsrate des aushärtbaren Materials in Abhängigkeit, insbesondere proportional, zur Festigkeit des aushärtbaren Materials zu einem definierten Zeitpunkt nach dem Anmachen des aushärtbaren Materials und/oder nach dem Austritt des aushärtbaren Materials aus dem Druckkopf eingestellt. Dies bedeutet, dass die Auftragsrate direkt auf die zu einem definierten Zeitpunkt erreichbare Festigkeit des aushärtbaren Materials abgestimmt wird. Die zeitliche Festigkeitsentwicklung des aushärtbaren Materials kann dabei unverändert bleiben. Je höher die Festigkeit des aushärtbaren Materials zum definierten Zeitpunkt, desto grösser kann die Auftragsrate gewählt werden und desto schneller kann der Formkörper hergestellt werden.

Es kann aber auch bevorzugt sein, die Festigkeit des aushärtbaren Materials zum definierten Zeitpunkt in Abhängigkeit, insbesondere proportional, zu einer vorgegebenen Auftragsrate einzustellen. In diesem Fall kann die Auftragsrate unverändert oder konstant bleiben. Je höher die gewünschte Auftragsrate, desto höher muss in diesem Fall die zeitliche Festigkeitsentwicklung des aushärtbaren Materials eingestellt werden.

Ebenfalls vorteilhaft kann es sein, wenn zugleich die Festigkeit des aushärtbaren Materials zum definierten Zeitpunkt als auch die Auftragsrate eingestellt und aufeinander abgestimmt werden.

Nach der Erfindung wird die Auftragsrate des aushärtbaren Materials mit zunehmender Schichtanzahl verändert, beispielsweise erhöht**,** insbesondere proportional zur Schichtanzahl.

Da Schichten in höheren Lagen während dem Aushärten weniger Last tragen als darunterliegende Schichten, sind in höheren Lagen geringere Festigkeiten notwendig. Entsprechend lässt sich durch die Erhöhung der Auftragsrate unter Umständen die Geschwindigkeit der Herstellung des Formkörpers weiter erhöhen.

Weiter bevorzugt wird zwischen der Auftragung von zwei aufeinanderfolgenden Schichten aus aushärtbarem Material eine Wartezeit eingehalten, wobei die Wartezeit in Abhängigkeit der zeitlichen Festigkeitsentwicklung des aushärtbaren Materials gewählt wird. Die Wartezeit ist dabei insbesondere zwischen 0.1 Minuten und 10 Minuten, im Besonderen zwischen 1 Minute und 10 Minuten, im Speziellen zwischen 10 Minuten und 20 Minuten.

Die Einhaltung einer Wartezeit ermöglicht es, die Aufbaurate an die zeitliche Festigkeitsentwicklung des aushärtbaren Materials anzupassen und zugleich die Bewegungsgeschwindigkeit des Druckkopfs konstant zu halten oder im Hinblick auf eine möglichst geeignete Auftragung des aushärtbaren Materials, insbesondere unabhängig von der Aufbaurate, einzustellen.

Dabei wir im Besonderen die Wartezeit so gewählt, dass diese von der Lage der aufzutragenden Schicht in Bezug auf die bereits aufgetragenen Schichten abhängt. Bevorzugt wird die Wartezeit unter Berücksichtigung der Geometrie des herzustellenden Formkörpers bestimmt. Beispielsweise kann die Wartezeit mit zunehmender Schichtanzahl abnehmen, insbesondere proportional zur Schichtanzahl. Letzteres kann z.B. bei senkrecht verlaufenden Wänden des Formkörpers vorteilhaft sein.

Ebenfalls vorteilhaft kann es sein, wenn eine Bewegungsgeschwindigkeit des Druckkopfs in Abhängigkeit der zeitlichen Festigkeitsentwicklung des aushärtbaren Materials eingestellt wird. Damit kann der Druckkopf beispielsweise mit einer Geschwindigkeit bewegt werden, welche ein im Wesentlichen kontinuierliches Auftragen des aushärtbaren Materials ermöglicht. Falls erwünscht können dadurch Wartezeiten zwischen dem Auftragen von benachbarten Schichten reduziert oder gänzlich vermieden werden. Dies kann beispielsweise vorteilhaft sein, um einen möglichst konstanten Volumenstrom des aushärtbaren Materials aus dem Druckkopf zu erreichen, was unter Umständen der Haftung zwischen benachbarten Schichten und/oder der Qualität des hergestellten Formkörpers insgesamt zu Gute kommt.

Die Bewegungsgeschwindigkeit des Druckkopfs wird in einer bevorzugten Ausführungsform in Abhängigkeit, insbesondere proportional, zu einer Länge einer Strecke, welche der Druckkopf in einer aktuellen Schicht des Formkörpers unter Abgabe von aushärtbarem Material abzufahren hat, eingestellt. Bestehen beispielsweise benachbarte Schichten aus unterschiedlich langen Strecken, kann so in effektiver Weise eine konstante Auftragsrate erreicht werden. Schichten mit kurzen abzufahrenden Strecken werden dabei mit einem sich langsam bewegenden Druckkopf aufgebracht, während Schichten mit langen abzufahrenden Strecken mit einem sich schneller bewegende Druckkopf erzeugt werden. Die Zeit, welche für die Herstellung einer einzelnen Schicht benötigt wird, kann aber z. B. konstant gehalten werden.

Prinzipiell kann der Druckkopf aber auch unabhängig von der Länge der Strecke, welche der Druckkopf in einer aktuellen Schicht des Formkörpers unter Abgabe von aushärtbarem Material abzufahren hat, bewegt werden. Dies kann beispielsweise vorteilhaft sein, wenn ein möglichst konstanter Volumenstrom bei der Ausgabe des aushärtbaren Materials aus dem Druckkopf erwünscht ist.

Die Bewegungsgeschwindigkeit wird in einer vorteilhaften Ausführungsform so gewählt, dass diese von der Lage der aufzutragenden Schicht in Bezug auf die bereits aufgetragenen Schichten abhängt. Bevorzugt wird die Bewegungsgeschwindigkeit unter Berücksichtigung der Geometrie des herzustellenden Formkörpers bestimmt. Beispielsweise kann die Bewegungsgeschwindigkeit mit zunehmender Schichtanzahl zunehmen, insbesondere proportional. Letzteres kann z.B. bei senkrecht verlaufenden Wänden des Formkörpers vorteilhaft sein.

Der Volumenstrom des aus dem Druckkopf austretenden aushärtbaren Materials wird insbesondere in Abhängigkeit, insbesondere proportional, zur Bewegungsgeschwindigkeit des Druckkopfs gewählt.

Im Besonderen wird die zeitliche Festigkeitsentwicklung des aushärtbaren Materials vor und/oder während der generativen Fertigung des Formkörpers anhand des konkret eingesetzten aushärtbaren Materials bestimmt.

Die zeitliche Festigkeitsentwicklung des aushärtbaren Materials wird insbesondere während der generativen Fertigung des Formkörpers gemessen, im Speziellen mehrmals und/oder in regelmässigen Zeitabständen. Damit kann beispielsweise die Auftragsrate und/oder die zeitliche Festigkeitsentwicklung des aushärtbaren Materials während der Auftragung angepasst werden. Dadurch können z.B. Schwankungen in der Zusammensetzung des aushärtbaren Materials und damit verbundene Änderungen in der zeitlichen Festigkeitsentwicklung korrigiert oder ausgeglichen werden.

Beispielsweise kann die zeitliche Festigkeitsentwicklung des aushärtbaren Materials nach erfolgter Auftragung einer Schicht und/oder vor Auftragung einer nachfolgenden Schicht gemessen werden.

Die zeitliche Festigkeitsentwicklung wird insbesondere durch wenigstens einmalige, im Besonderen mehrmalige, Messung einer physikalischen Grösse des aushärtbaren Materials bestimmt. Die Messung der physikalischen Grösse des aushärtbaren Materials erfolgt dabei beispielsweise zu wenigstens einem definierten Zeitpunkt, mit Vorteil zu mehreren definierten Zeitpunkten, nach dem Anmachen des aushärtbaren Materials und/oder nach dem Austritt des aushärtbaren Materials aus dem Druckkopf.

Zur Bestimmung der Festigkeitsentwicklung kann die gemessene physikalische Grösse beispielsweise durch eine vorgängig erfolgte Kalibration in eine Festigkeit umgerechnet werden.

Im Besonderen kann anhand der Messung der physikalischen Grösse beispielsweise ein Sollwertzeitpunkt ermittelt werden, an welchem ein vorgegebener Sollwert für die jeweilige physikalische Grösse erreicht wird.

Die Bewegungsgeschwindigkeit des Druckkopfs, die Wartezeit und/oder die Auftragsrate können sodann in Abhängigkeit vom Sollwertzeitpunkt eingestellt werden. Dies kann beispielsweise wie folgt erfolgen:
a) Die Bewegungsgeschwindigkeit wird umgekehrt proportional zum Sollwertzeitpunkt eingestellt und/oder
b) Die Wartezeit wird proportional zum Sollwertzeitpunkt eingestellt und/oder
c) Die Auftragsrate wird umgekehrt proportional zum Sollwertzeitpunkt eingestellt.

Die Proportionalitätsfaktoren können vorgängig durch Kalibration in an sich bekannter Weise ermittelt werden.

Damit kann eine zuverlässige Anpassung an die konkrete Festigkeitsentwicklung des aushärtbaren Materials vorgenommen werden.

Es ist aber z.B. auch möglich, anhand der Messung der physikalischen Grösse zu einem vorgegebenen Referenzzeitpunkt einen Istwert der gemessenen physikalischen Grösse zu ermitteln.

Die Bewegungsgeschwindigkeit des Druckkopfs, die Wartezeit und/oder die Auftragsrate können sodann in Abhängigkeit vom Istwert der gemessenen physikalischen Grösse eingestellt werden. Dies kann beispielsweise wie folgt erfolgen:
a) Die Bewegungsgeschwindigkeit wird proportional zum Istwert der gemessenen physikalischen Grösse eingestellt und/oder
b) Die Wartezeit wird umgekehrt proportional zum Istwert der gemessenen physikalischen Grösse eingestellt und/oder
c) Die Auftragsrate wird proportional zum Istwert der gemessenen physikalischen Grösse eingestellt.

Grundsätzlich können aber auch andere Abhängigkeiten zwischen Sollwertzeitpunkt und/oder Istwert der gemessenen physikalischen Grösse und der Bewegungsgeschwindigkeit des Druckkopfs, der Wartezeit und/oder der Auftragsrate vorgesehen werden.

Vorliegend ist es im Besonderen vorteilhaft, wenn als physikalische Grösse die Temperatur, die elektrische Leitfähigkeit, die Eindringkraft eines definierten Gegenstands bei vorgegebener Eindringtiefe, die Eindringtiefe eines definierten Gegenstands bei vorgegebener Eindringkraft und/oder die Reflektion von Schallwellen, insbesondere Ultraschallwellen, am aushärtbaren Material gemessen wird.

Aus den genannten Grössen lässt sich in zuverlässiger Art und Weise auf die Festigkeitsentwicklung des aushärtbaren Materials schliessen. Es können aber grundsätzlich auch andere Grössen bestimmt werden, welche mit der Festigkeitsentwicklung zusammenhängen.

Die Eindringkraft eines definierten Gegenstands bei vorgegebener Eindringtiefe oder die Eindringtiefe eines definierten Gegenstands bei vorgegebener Eindringkraft wird bevorzugt in einem Penetrationsnadelverfahren bestimmt, wobei als definierter Gegenstand typischerweise eine Nadel verwendet wird. Derartige Verfahren sind dem Fachmann an sich bekannt. Nähere Angaben dazu finden sich zudem in der Publikation "Kontinuierliche Messung der Festigkeitsentwicklung von Spritzbeton" von Oblak et al., Spritzbeton-Tagung 2012 (Herausgeber: Prof. Wolfgang Kusterle) in Kapitel 1.

Das Messprinzip der Ultraschallmessung basiert auf der Theorie der Schallausbreitung in Stoffen und der Korrelation mit deren mechanischen Eigenschaften. Wenn eine Transversalwelle auf ein viskoelastisches Material trifft, wird die Amplitude deutlich gedämpft und ein Teil der Welle reflektiert. Dieser Reflex wird am Messfühler detektiert. Mit zunehmendem Aushärten des Materials wird die Verringerung der Amplitude immer stärker. Aus der relativen Amplitudenverringerung kann sodann der Schermodul bestimmt werden, welcher wiederum ein Mass für die Festigkeit des aushärtbaren Materials ist.

Für Ultraschallmessungen werden bevorzugt Messfühler eingesetzt, welche Ultraschall-Pulse im Bereich von 0.1 bis 10 MHz erzeugen. Je nachdem, ob der Kompressions- oder der Schermodul gemessen werden soll, werden Longitudinalwellen oder Transversalwellen emittiert. Das Ultraschallsignal wird insbesondere durch einen definierten Wellenleiter auf die Grenzfläche zur Probe geleitet, von der es teilweise wieder reflektiert wird, der zweite Teil der ursprünglichen Welle wird dann zusätzlich noch an der Grenzfläche zwischen Probe und Luft reflektiert. Gemessen und ausgewertet werden kann dann die Amplitude und/oder die Zeitdauer von der Wellenerzeugung bis zur Detektion des ersten Reflexes, welcher an der Grenzfläche von Wellenleiter und Probe entsteht. Diese Amplitude und Zeitdauer hängen von den mechanischen Eigenschaften der Probe ab. Da die Ausbreitungsgeschwindigkeit der Welle durch den Wellenleiter stark von der Temperatur des Wellenleiters abhängt, wird die Temperatur bevorzugt gemessen und bei der Auswertung mitberücksichtigt. Nähere Angaben zur Ultraschallmessung finden sich ebenfalls in der Publikation "Kontinuierliche Messung der Festigkeitsentwicklung von Spritzbeton" von Oblak et al., Spritzbeton-Tagung 2012 (Herausgeber: Prof. Wolfgang Kusterle) in Kapitel 3. Diese Zusammenhänge sind dem Fachmann aus dem Spritzbetonbereich an sich bekannt. Überraschenderweise hat sich aber gezeigt, dass diese auch im Zusammenhang mit der generativen Fertigung genutzt werden können.

Besonders bevorzugt wird die Festigkeitsentwicklung des aushärtbaren Materials vorliegend durch ein Penetrationsnadelverfahren und/oder durch Schallmessung, insbesondere Ultraschallmessung, bestimmt.

Weiter ist es von Vorteil, wenn das aushärtbare Material mit einem die Aushärtung beschleunigenden Mittel und/oder einem die Aushärtung verzögernden Mittel behandelt wird. Insbesondere wird dem aushärtbaren Material eine beschleunigende Substanz ("Erhärtungsbeschleuniger") und/oder verzögernde Substanz ("Erhärtungsverzögerer") beigemischt. Dies erfolgt mit Vorteil im Bereich des Druckkopfs, insbesondere möglichst unmittelbar vor dem Austritt des aushärtbaren Materials aus dem Druckkopf.

Dadurch lässt sich die zeitliche Festigkeitsentwicklung des aushärtbaren Materials gezielt einstellen. Im Besonderen kann durch Zugabe eines Erhärtungsbeschleunigers der Herstellungsprozess des Formkörpers insgesamt stark beschleunigt werden. Auch kann so die zeitliche Festigkeitsentwicklung angepasst werden, ohne dass andere Verfahrensparameter verändert werden müssen.

Als Erhärtungsbeschleuniger können eine Vielzahl von dem Fachmann bekannten Substanzen eingesetzt werden.

Beim aushärtbaren Material handelt es sich um eine mineralische Bindemittelzusammensetzung. Der Erhärtungsbeschleuniger umfasst evorzugt ein oder mehrere der folgenden Vertreter:
a) einen oder mehrere Aminoalkohole und/oder Salze davon
b) ein oder mehrere Alkali- und/oder Erdalkalinitrate
c) ein oder mehrere Alkali- und/oder Erdalkalinitrite
d) ein oder mehrere Alkali- und/oder Erdalkalithiocyanate
e) ein oder mehrere Alkali- und/oder Erdalkalihalogenide
f) ein oder mehrere Alkali- und/oder Erdalkalikarbonate
g) Glyzerin und/oder Glyzerinderivate
h) ein oder mehrere Glykole und/oder Glykolderivate
i) ein oder mehrere Aluminiumsalze und/oder Aluminiumhydroxide
j) ein oder mehrere Alkali- und/oder Erdalkalihydroxide
k) ein oder mehrere Alkali- und/oder Erdalkalisilikate
l) ein oder mehrere Alkali- oder Erdalkalioxide
m) Kristallisationskeime, insbesondere Calcium-Silikat-Hydrat-Verbindungen in feinteiliger Form.

Damit lässt sich beispielsweise eine flexible Anpassung an unterschiedlichste Anwendungen realisieren.

Erhärtungsverzögerer sind beispielsweise ausgewählt aus der Liste umfassend Hydroxycarbonsäuren, Saccharose und/oder Phosphate. Dies im Besonderen falls es sich beim aushärtbaren Material um ein mineralisches Bindemittel oder eine mineralische Bindemittelzusammensetzung handelt.

Das aushärtbare Material umfasst eine mineralische Bindemittelzusammensetzung, insbesondere eine hydraulische Bindemittelzusammensetzung, bevorzugt eine Mörtel- oder Betonzusammensetzung, oder es besteht daraus. Die mineralische Bindemittelzusammensetzung ist insbesondere wie vorstehend beschrieben zusammengesetzt.

Optional kann die mineralische Bindemittelzusammensetzung wenigstens ein Zusatzmittel, beispielsweise ein Betonzusatzmittel und/oder ein Mörtelzusatzmittel und/oder Prozesschemikalien beinhalten. Das wenigstens eine Zusatzmittel umfasst insbesondere einen Entschäumer, einen Farbstoff, ein Konservierungsmittel, ein Fliessmittel, einen Verzögerer, einen Beschleuniger, einen Luftporenbildner, ein Rheologiehilfsmittel, einen Schwindreduzierer und/oder einen Korrosionsinhibitor oder Kombinationen davon.

Eine mineralische Bindemittelzusammensetzung wird mit Vorteil zusammen mit einem Fliessmittel oder Verflüssiger eingesetzt oder sie enthält solche. Als Fliessmittel kommen beispielsweise Lignosulfonate, sulfonierte Naphthalin-Formaldehyd-Kondensate, sulfonierte Melamin-Formaldehyd-Kondensate, sulfonierte Vinylcopolymere, Polyalkylenglykole mit Phosphonatgruppen, Polyalkylenglykole mit Phosphatgruppen, Polycarboxylate, Kammpolymere mit Polyalkylenoxid-Seitenketten und anionischen Gruppen im Polymer-Rückgrat, wobei die anionischen Gruppen im Besonderen ausgewählt sind aus Carboxylatgruppen, Sulfonatgruppen, Phosphonatgruppen oder Phosphatgruppen, oder Mischungen der genannten Fliessmittel, in Frage.

Das Fliessmittel beinhaltet im Speziellen ein Polycarboxylat, insbesondere einen Polycarboxylatether. Insbesondere ist das Fliessmittel ein Kammpolymer umfassend ein Polycarboxylat-Rückgrat mit daran gebundenen Polyalkylenoxid-Seitenketten, insbesondere Polyethylenoxid-Seitenketten. Die Seitenketten sind dabei insbesondere über Ester-, Ether-, Imid- und/oder Amidgruppen an das Polycarboxylat-Rückgrat gebunden.

Vorteilhafte Fliessmittel sind z.B. Copolymere aus (Meth)acrylsäure- und/oder Maleinsäuremonomeren sowie Makromonomeren ausgewählt aus Polyalkylenglykol-vinylethern (VPEG), Polyalkylenglykol-allylethern (APEG), Polyalkylenglykol-methallylethern (HPEG), oder Polyalkylenglykol-isoprenylethern (TPEG oder IPEG). Besonders geeignet sind z.B. Copolymere aus Maleinsäure oder deren Derivaten, Allylethern, insbesondere Polyethylenglykol-allylethern, und Vinylacetat. Entsprechende Copolymere sowie deren Herstellung sind beispielsweise in der EP 2 468 696 A1 (Sika Technology AG) beschrieben. Insbesondere geeignet sind z.B. sind die Copolymere P-1 bis P-4, wie sie in den Absätzen 0058 bis 0061 und Tabelle 1 der EP 2 468 696 A1 beschrieben sind.

Ebenfalls geeignet sind beispielsweise Copolymere aus Maleinsäure oder deren Derivaten, Allylethern, insbesondere Polyethylenglykol-allylethern, und (Meth)acrylsäure. Derartige Copolymere und deren Herstellung sind in der EP 2 522 680 A1 (Sika Technology AG) beschrieben. Vorteilhaft sind dabei z.B. sind die Copolymere P-1 bis P-6, wie sie in den Absätzen 0063 bis 0070 und Tabelle 1 der EP 2 522 680 A1 beschrieben sind.

Des Weiteren sind geeignete Polycarboxylatether und Herstellungsverfahren beispielsweise offenbart in der EP 1 138 697 B1 auf Seite 7 Zeile 20 bis Seite 8 Zeile 50 sowie in deren Beispielen, oder in EP 1 061 089 B1 auf Seite 4 Zeile 54 bis Seite 5 Zeile 38 sowie in deren Beispielen. In einer speziellen Ausführung davon, wie sie in EP 1 348 729 A1 auf Seite 3 bis Seite 5 sowie in deren Beispielen beschrieben sind, kann das Kammpolymer in festem Aggregatszustand hergestellt werden.

Entsprechende Kammpolymere werden auch von Sika Schweiz AG unter der Handelsnamenreihe ViscoCrete^{®} kommerziell vertrieben.

Ein zweiter Aspekt der vorliegenden einen Aspekt der Offenbarung, der nicht in den Schutzumfang der Ansprüche fällt, betrifft eine Vorrichtung zur generativen Fertigung eines Formkörpers aus einem aushärtbaren Material, insbesondere zur Durchführung eines wie vorstehend beschriebenen Verfahrens. Die Vorrichtung umfasst einen in wenigstens einer Raumrichtung bewegbaren Druckkopf, mit welchem das aushärtbare Material an vorgegebenen Stellen schichtweise aufgetragen werden kann, sowie eine Steuereinheit, mit welcher der Druckkopf kontrolliert werden kann. Die Steuereinheit ist dabei derart ausgebildet, dass die zeitliche Festigkeitsentwicklung erfasst und eine Auftragsrate des aushärtbaren Materials und die zeitliche Festigkeitsentwicklung des aushärtbaren Materials aufeinander abgestimmt werden können.

Die Erfassung der zeitlichen Festigkeitsentwicklung in der Steuereinheit kann dabei insbesondere manuell, z.B. durch manuelle Eingabe eines entsprechenden Wertes, oder automatisch, beispielsweise durch Auslesen einer geeigneten Messeinrichtung, erfolgen.

Falls die zeitliche Festigkeitsentwicklung auf Basis einer Messung einer physikalischen Grösse des aushärtbaren Materials erfolgt, kann die Erfassung der zeitlichen Festigkeitsentwicklung in der Steuereinheit auch eine Umrechnung der physikalischen Grösse in die zeitliche Festigkeitsentwicklung beinhalten. Dies kann z.B. durch Umrechnung anhand von vorgängig ermittelten, und insbesondere in einem Speicherbereich der Steuereinheit abgelegten, Kalibrierungsdaten erfolgen.

Die Steuereinheit verfügt insbesondere über eine Speichereinheit, in welcher einer oder mehrere erfasste zeitliche Festigkeitsentwicklungen und/oder Kalibrierungsdaten gespeichert werden können. Insbesondere verfügt die Steuereinheit zudem über eine Rechen- und Ausgabeeinheit, welche dazu ausgelegt ist, anhand der erfassten Festigkeitsentwicklungen Steuersignale für den Druckkopf zu erzeugen.

In einer besonders bevorzugten Ausführungsform beinhaltet die erfindungsgemässe Vorrichtung zudem eine Messeinheit, mit welcher die zeitliche Festigkeitsentwicklung und/oder eine physikalische Grösse des aushärtbaren Materials gemessen werden kann. Die physikalische Grösse ist dabei wie vorstehend im Zusammenhang mit dem Verfahren beschrieben definiert.

Die Messeinheit ist insbesondere derart ausgebildet, dass über den Druckkopf eine Probe des aushärtbaren Materials in die Messeinheit gegeben werden kann und sodann eine zeitabhängige Messung einer physikalischen Grösse und/oder der Festigkeit erfolgen kann.

Im Besonderen handelt es sich bei der Messeinheit um eine Messeinheit zur Messung der Temperatur, der elektrischen Leitfähigkeit, der Eindringkraft eines definierten Gegenstands bei vorgegebener Eindringtiefe, der Eindringtiefe eines definierten Gegenstands bei vorgegebener Eindringkraft und/oder der Reflektion von Schallwellen, insbesondere Ultraschallwellen, am aushärtbaren Material. Im Besonderen handelt es sich um einen Penetrometer zur Durchführung eines Penetrationsnadelmessverfahrens und/oder eine Ultraschallmesszelle.

Die Ultraschallmesszelle ist insbesondere wie vorstehend im Zusammenhang mit dem Verfahren oder in der Publikation "Kontinuierliche Messung der Festigkeitsentwicklung von Spritzbeton" von Oblak et al., Spritzbeton-Tagung 2012 (herausgeber: Prof. Wolfgang Kusterle) in Kapitel 3 beschrieben, ausgebildet. Insbesondere beinhaltet die Ultraschallmesszelle einen Messfühler, welcher Ultraschall-Pulse im Bereich von 0.1 bis 10 MHz erzeugen kann, einen Wellenleiter und/oder einen Temperatursensor.

Weiter beinhaltet die erfindungsgemässe Vorrichtung im Besonderen eine Fördereinrichtung, insbesondere eine Pumpe, mit welcher das aushärtbare Material über eine Leitung zum Druckkopf gefördert werden kann. Die Steuereinheit ist dabei mit Vorteil so ausgelegt, dass die Förderleistung der Fördereinrichtung gesteuert werden kann.

Weiter kann es vorteilhaft sein, wenn die erfindungsgemässe Vorrichtung über wenigstens eine Durchflussmessvorrichtung verfügt, mit welcher ein durch den Druckkopf geförderter Volumenstrom gemessen werden kann. Die Steuereinheit ist dabei insbesondere derart ausgebildet, dass der gemessene Volumenstrom erfasst und insbesondere bei der Steuerung des Druckkopfs und/oder der Fördereinrichtung für das aushärtbare Material berücksichtigt werden kann.

Der Druckkopf verfügt in einer vorteilhaften Ausführungsform über ein Ventil, über welches eine Auslassöffnung des Druckkopfs geöffnet und verschlossen werden kann. Dies insbesondere kontinuierlich. Das Ventil ist mit Vorteil über die Steuereinheit kontrollierbar. Dies ermöglicht eine feine Dosierung des Volumenstroms an aushärtbarem Material, welches mit dem Druckkopf aufgetragen wird.

Weiter kann es von Vorteil sein, wenn der Druckkopf im Bereich des Auslasses über wenigstens eine Dosiervorrichtung, insbesondere zwei Dosiervorrichtungen, zur Beimischung wenigstens eines Additivs in das aushärtbare Material verfügt. Bevorzugt verfügt der Druckkopf dabei zusätzlich über eine Mischvorrichtung, mit welcher das Additiv oder die Additive und das aushärtbare Material vor dem Austritt aus dem Druckkopf vermischt werden können.

Das wenigstens eine Additiv kann beispielsweise über eine oder mehrere weitere Fördereinrichtung, z.B. weitere Pumpen, und Förderleitungen zu den Dosiervorrichtungen gefördert werden. Die weiteren Fördereinrichtungen sind dabei insbesondere über die Steuereinheit steuerbar, im Besonderen unabhängig voneinander.

Der Druckkopf verfügt insbesondere über wenigstens eine Auslassdüse, durch welche das aushärtbare Material ausgetragen werden kann. In einer bevorzugten Variante ist der Druckkopf in ein, zwei oder drei Raumrichtung bewegbar. Besonders bevorzugt sind Druckköpfe, welche in drei Raumrichtungen bewegbar sind. Dadurch können in besonders einfacher Art und Weise nahezu beliebig geformte Formkörper hergestellt werden.

Die Bewegung des Druckkopfs kann z.B. realisiert werden, indem der Drucckopf auf einen herkömmlichen Roboterarm montiert wird, welcher in ein, zwei oder drei Raumrichtungen bewegbar ist.

Auch möglich ist es, Bewegungen in ein, zwei oder drei Raumrichtungen durch entsprechende Bewegungen des Bauraumbereichs zu realisieren. Der Bauraumbereich ist dabei derjenige Bereich, beispielsweise eine Fläche, auf welche der Formkörper aufgebaut wird.

Bei einem Druckkopf welcher in zwei Raumrichtungen bewegbar ist, kann eine allenfalls erwünschte Bewegung in die dritte Raumrichtung z.B. durch einen anhebbaren und/oder absenkbaren Bauraumbereich realisiert werden. Roboterarm und/oder Bauraumbereich sind dabei insbesondere über die Steuereinheit steuerbar.

In einem weiteren Aspekt betrifft die Erfindung die Verwendung einer wie vorstehend im zweiten Aspekt beschriebenen Vorrichtung zur Herstellung von Formkörpern aus mineralischen Bindemitteln oder mineralischen Bindemittelzusammensetzungen, im Besonderen Beton- und/oder Mörtelzusammensetzungen. Dabei handelt es sich insbesondere um Fertigteile für Bauwerke, z.B. für ein Gebäude, ein Mauerwerk und/oder einer Brücke.

Die nachfolgenden Ausführungsbeispiele verdeutlichen die Erfindung weiter.

### Kurze Beschreibung der Zeichnungen

Die zur Veranschaulichung der Ausführungsbeispiele verwendeten Figuren zeigen Folgendes:
- Fig. 1: Eine schematische Darstellung einer Vorrichtung zur generativen Fertigung eines Formkörpers aus einem aushärtbaren Material;
- Fig. 2: Eine Darstellung der erforderlichen zeitlichen Festigkeitsentwicklungen zur Herstellung von Formkörpern mit verschiedenen Auftragsraten (unterbrochene Geraden) sowie gemessene zeitliche Festigkeitsentwicklungen von mineralischen Bindemittelzusammensetzungen mit und ohne Beimischung von Erhärtungsbeschleuniger (ausgezogene Linien);
- Fig. 3: Auf der rechten Seite einen Formkörper, welcher mit dem erfindungsgemässen Verfahren hergestellt wurde und auf der linken Seiten einen Formkörper, welcher mit einem herkömmlichen Verfahren ohne Berücksichtigung der zeitlichen Festigkeitsentwicklung hergestellt wurde.

### Ausführungsbeispiel

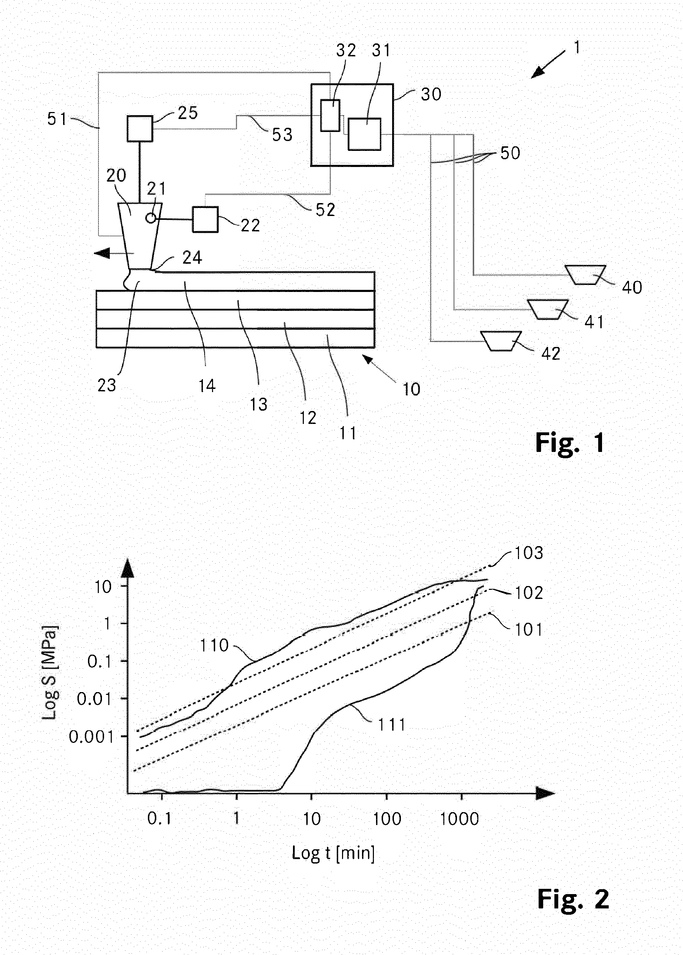

Fig. 1 zeigt eine schematische Darstellung einer erfindungsgemässen Vorrichtung 1 zur Herstellung eines Formkörpers 10 aus einem aushärtbaren Material 23 während dem Herstellungsprozess.

Das aushärtbare Material 23, vorliegend eine herkömmliche zementöse Mörtelzusammensetzung, wird über einen mit einem nicht dargestellten Roboterarm in allen drei Raumrichtungen bewegbaren Druckkopf 20 ausgetragen. In der in Fig. 1 dargestellten Situation bewegt sich der Druckkopf 20 nach links, was durch den Pfeil am Druckkopf 20 angedeutet ist. In Fig. 1 wurden mit dem Druckkopf 20 bereits drei vollständige, übereinanderliegende Schichten 11, 12, 13 aufgebaut. Die vierte Schicht 14 ist in Fig. 1 noch im Aufbau.

Der Druckkopf 20 wird über eine Pumpe 25 und eine Zuleitung mit aushärtbarem Material 23 versorgt, welches durch die endseitige Düsenöffnung 24 des Druckkopfs 20 austritt. Am Druckkopf ist zudem eine Dosiervorrichtung 21 für einen Erhärtungsbeschleuniger angeordnet, welche über eine weitere Pumpe 22 und eine zugehörige Leitung zugeführt wird. Der Erhärtungsbeschleuniger kann grundsätzlich eine beliebige für zementöse Mörtelzusammensetzungen geeignete Substanz sein.

Der Druckkopf 20 und die beiden Pumpen 22, 25 sind über Datenleitungen 51, 52, 53 mit einer Steuereinheit 30 verbunden. Die Steuereinheit 30 kann über eine Rechen- und Ausgabeeinheit 32 elektrische Signale zur Steuerung der Bewegung des Druckkopfs 20 sowie der Fördermengen der beiden Pumpen 22, 25 ausgeben.

Weiter umfasst die erfindungsgemässe Vorrichtung 1 in Fig. 1 auf der rechten Seite drei Messzellen 40, 41, 42. Diese sind als Ultraschallmesszellen ausgebildet, wie sie in der Publikation "Kontinuierliche Messung der Festigkeitsentwicklung von Spritzbeton" von Oblak et al., Spritzbeton-Tagung 2012 (Herausgeber: Prof. Wolfgang Kusterle) in Kapitel 3 beschrieben sind.

Der Druckkopf 20 kann zur Ermittlung der Festigkeitsentwicklung des aushärtbaren Materials 23 während dem Herstellvorgang Materialproben des aushärtbaren Materials 23 in die Messzellen 40, 41, 42 abgeben. Die dabei ermittelten Daten bzw. Reflexionseigenschaften werden über Datenleitungen 50 in die Steuereinheit 30 übermittelt, wo sie in einem Speicherbereich 31 abgelegt werden können.

Die Steuereinheit 30 ist dabei so ausgebildet, dass anhand der ermittelten Daten bzw. der zeitlichen Festigkeitsentwicklungen die Betriebsparameter der Vorrichtung 1 angepasst werden kann, so dass beispielsweise eine vorgewählte Auftragsrate des aushärtbaren Materials 23 eingehalten werden kann. Entsprechende Parameter können in der Speichereinheit 31 abgelegt sein (siehe auch unten, Beschreibung zu Fig. 2).

Konkret kann im Betrieb bei konstanter Fördermenge des aushärtbaren Materials beispielsweise die Bewegungsgeschwindigkeit des Druckkopfs 20 auf die zeitliche Festigkeitsentwicklung abgestimmt werden. Der Druckkopf kann dabei beispielsweise so gesteuert werden, dass bei einer Bewegung von rechts nach links aushärtbares Material ausgetragen wird, während bei der Bewegung von links nach rechts die Austragung pausiert wird. So kann der Druckkopf 20 jede neue Schicht in der Ebene vom gleichen Ausgangspunkt aus aufbauen. Die Geschwindigkeit bei der Rückfahrt von links nach rechts kann dabei beispielsweise verlangsamt werden, oder es wird am Ausgangspunkt zur Herstellung einer weiteren Schicht eine Wartezeit eingehalten, um die notwendige Festigkeit des aushärtbaren Materials zu gewährleisten, bevor eine weitere Schicht aufgetragen wird.

Die zeitliche Festigkeitsentwicklung des aushärtbaren Materials 23 kann dabei beispielsweise vor der Auftragung der ersten Schicht 11 in Messzellen 40 erfolgen. Soll eine bestimmte Auftragsrate erreicht werden, stellt die Steuereinheit 30 in Abhängigkeit der Festigkeitsentwicklung und allenfalls benötigten Kalibrierungsdaten, welche in der Speichereinheit 31 abgelegt sind, automatisch geeignete Parameter ein, z.B. die Bewegungsgeschwindigkeit des Drucckopfs 20 sowie die Fördermenge an aushärtbarem Material.

Nach der Auftragung der ersten Schicht 11 kann die zeitliche Festigkeitsentwicklung des aushärtbaren Materials 23 erneut bestimmt werden, z.B. in Messzelle 41. Falls sich Abweichungen ergeben, kann dies ausgeglichen werden.

Fig. 2 zeigt die für eine bestimmte Auftragsrate erforderliche zeitliche Festigkeitsentwicklungen 101, 102, 103 des aushärtbaren Materials 23. "S" steht dabei für die Druckfestigkeit des aushärtbaren Materials, während "t" der Zeit nach dem Austritt aus dem Druckkopf 20 entspricht. Die zeitlichen Festigkeitsentwicklungen 101, 102, 103 können im Speicherbereich 31 der Steuereinheit 30 aus Fig. 1 abgelegt sein. Die erste zeitliche Festigkeitsentwicklung 101 entspricht einer Auftragsrate von 1 Meter pro 5 Minuten. Die zweite zeitliche Festigkeitsentwicklung 102 entspricht einer Auftragsrate von 1 Meter pro 2.5 Minuten und die dritte zeitliche Festigkeitsentwicklung 103 einer Auftragsrate von 1 Meter pro 1 Minute. Die Auftragsrate entspricht dabei der pro Zeiteinheit errichteten Höhe des Formkörpers 10.

Die Kurve 110 stellt die mit einer Ultraschallmesszelle 40 gemessene zeitliche Festigkeitsentwicklung des aushärtbaren Materials nach dem Austritt aus dem Druckkopf 20 dar. Wie zu erkennen ist, liegt die zeitliche Festigkeitsentwicklung stets über der erforderlichen zeitlichen Festigkeitsentwicklungen 101 für eine Auftragsrate von 1 Meter pro 2.5 Minuten. Damit kann eine solche Auftragsrate problemlos realisiert werden.

Bei einem Vergleichsversuch wurde die Zugabe des Erhärtungsbeschleunigers unterbunden. Wie zu erkennen ist, kann in diesem Fall bereits eine Auftragsrate von 1 Meter pro 5 Minuten (erforderliche Festigkeitsentwicklung 101) nicht ohne Abstriche bei der Qualität des Formkörpers realisiert werden.

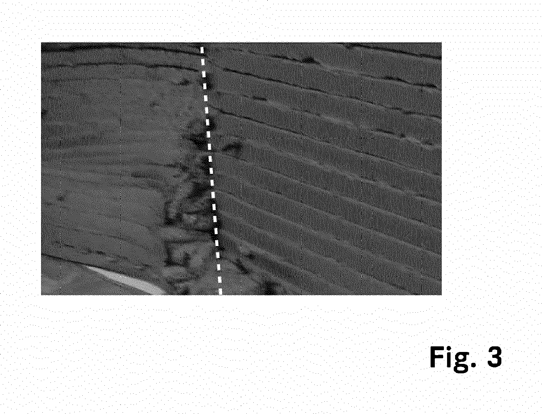

In Fig. 3 ist auf der rechten Seite ein Ausschnitt aus einem ca. 1 m hohen Formkörper gezeigt, welcher mit dem erfindungsgemässen Verfahren aus einer Mörtelzusammensetzung hergestellt wurde. Dabei ist gut zu erkennen, dass sämtliche Schichten, welche je über eine Höhe von ca. 1.5 cm verfügen, eine konstante Dicke und gleichmässige Form aufweisen.

Dagegen zeigt der auf der linken Seite dargestellte Formkörper, welcher ohne Berücksichtigung der zeitlichen Festigkeitsentwicklung hergestellt wurde, starke Deformationen und ungleichmässige Dicken der einzelnen Lagen. In diesem Fall lag eine zu hohe Auftragsrate bzw. eine zu geringe Festigkeitsentwicklung vor.

Die vorstehend beschriebene Ausführungsform ist jedoch lediglich als illustratives Beispiel zu verstehen, welches im Rahmen der Erfindung beliebig abgewandelt werden können.

So können anstelle der Ultraschallmesszellen 40, 41, 42 beispielsweise andere Messzellen vorgesehen werden, welche ein automatisiertes Penetrationsnadelverfahren durchführen. Auch können weniger als drei oder mehr als drei Messzellen vorgesehen sein.

Ebenso kann eine zusätzliche Dosiervorrichtung vorgesehen werden, über welche z.B. eine verzögernde Substanz anstelle oder zusätzlich zum Erhärtungsbeschleuniger im Druckkopf 20 beigemischt werden kann.

Auch kann zusätzlich oder anstelle der Dosiereinrichtung 21 am Druckkopf eine Vorrichtung zur Zugabe des Erhärtungsbeschleunigers direkt im Bereich der Pumpe 25 vorgesehen sein. Dabei kann die Zugabemenge des Erhärtungsbeschleunigers z.B. mit einem Durchflusssensor gemessen werden.

Weiter kann im Prinzip ein anderes aushärtbares Material verwendet werden, beispielsweise enthaltend organische Bindemittel.

## Patentansprüche

1. Verfahren zur Herstellung eines Formkörpers (10) aus einem aushärtbaren Material (23) in Form einer mineralischen Bindemittelzusammensetzung, wobei das aushärtbare Material in einem generativen Freiraumverfahren, durch einen in wenigstens einer Raumrichtung bewegbaren Druckkopf (20) schichtweise aufgetragen wird und wobei eine Höhe einer einzelnen Schicht 0.1 - 10 cm beträgt und wobei eine Auftragsrate des aushärtbaren Materials und die zeitliche Festigkeitsentwicklung (101,102,103) des aushärtbaren Material aufeinander abgestimmt werden, eine Bewegungsgeschwindigkeit des Druckkopfs in Abhängigkeit der zeitlichen Festigkeitsentwicklung des aushärtbaren Materials eingestellt wird, **dadurch gekennzeichnet, dass** die Auftragsrate des aushärtbaren Materials mit zunehmender Schichtanzahl verändert wird.

2. Verfahren nach Anspruch 1, wobei die Auftragsrate des aushärtbaren Materials in Abhängigkeit, insbesondere proportional, zur Festigkeit des aushärtbaren Materials zu einem definierten Zeitpunkt nach dem Anmachen des aushärtbaren Materials und/oder nach dem Austritt des aushärtbaren Materials aus dem Druckkopf eingestellt wird oder umgekehrt.

3. Verfahren nach wenigstens einem der Ansprüche 1 - 2, wobei zwischen der Auftragung von zwei aufeinanderfolgenden Schichten (11,12,13,14) aus aushärtbarem Material eine Wartezeit eingehalten wird, wobei die Wartezeit in Abhängigkeit der zeitlichen Festigkeitsentwicklung des aushärtbaren Materials gewählt wird.

4. Verfahren nach wenigstens einem der Ansprüche 1 - 3, wobei die zeitliche Festigkeitsentwicklung des aushärtbaren Materials während der generativen Fertigung des Formkörpers gemessen wird, insbesondere mehrmals und/oder in regelmässigen Zeitabständen.

5. Verfahren nach wenigstens einem der Ansprüche 1 - 4, wobei die zeitliche Festigkeitsentwicklung durch wenigstens einmalige, im Besonderen mehrmalige, Messung einer physikalischen Grösse des aushärtbaren Materials bestimmt wird, wobei bevorzugt die Messung der physikalischen Grösse des aushärtbaren Materials zu wenigstens einem definierten Zeitpunkt, mit Vorteil zu mehreren definierten Zeitpunkten, nach dem Anmachen des aushärtbaren Materials und/oder nach dem Austritt des aushärtbaren Materials aus dem Druckkopf erfolgt.

6. Verfahren nach Anspruch 5, wobei als physikalische Grösse die Temperatur, die elektrische Leitfähigkeit, die Eindringkraft eines definierten Gegenstands bei vorgegebener Eindringtiefe, die Eindringtiefe eines definierten Gegenstands bei vorgegebener Eindringkraft und/oder die Reflektion von Schallwellen, insbesondere Ultraschallwellen, am aushärtbaren Material gemessen wird.

7. Verfahren nach wenigstens einem der Ansprüche 1 - 6, wobei die zeitliche Festigkeitsentwicklung durch ein Penetrationsnadelverfahren und/oder durch Schallmessung, insbesondere Ultraschallmessung, bestimmt wird.

8. Verfahren nach wenigstens einem der Ansprüche 1 - 7, wobei das aushärtbare Material mit einem die Aushärtung beschleunigenden Mittel und/oder einem die Aushärtung verzögernden Mittel behandelt wird,

9. Verfahren nach Anspruch 8, wobei dem aushärtbaren Material im Bereich des Druckkopfs eine die Aushärtung beschleunigende Substanz und/oder die Aushärtung verzögernde Substanz beigemischt wird.

10. Verfahren nach wenigstens einem der Ansprüche 1 - 9, wobei das aushärtbare Material eine mineralische Bindemittelzusammensetzung, insbesondere eine hydraulische Bindemittelzusammensetzung, bevorzugt eine Mörtel- oder Betonzusammensetzung, umfasst oder daraus besteht.

## Claims

1. Method for producing a shaped body (10) from a curable material (23) in the form of a mineral binder composition, wherein the curable material is applied in layers in an additive free-space method, by means of a print head (20) that is movable in at least one direction in space and wherein a height of an individual layer is 0.1-10 cm and wherein an application rate of the curable material and the development of strength over time (101, 102, 103) of the curable material are matched to one another and a movement speed of the print head is set according to the development of strength over time of the curable material, **characterized in that** the application rate of the curable material is changed as the number of layers increases.

2. Method according to Claim 1, wherein the application rate of the curable material is set according to, in particular proportionally to, the strength of the curable material at a specified point in time after mixing of the curable material and/or after the exit of the curable material from the print head or vice versa.

3. Method according to at least one of Claims 1-2, wherein a wait time is observed between the application of two successive layers (11, 12, 13, 14) of curable material, wherein the wait time is chosen according to the development of strength over time of the curable material.

4. Method according to at least one of Claims 1-3, wherein the development of strength over time of the curable material is measured during the additive production of the shaped body, in particular multiple times and/or at regular intervals.

5. Method according to at least one of Claims 1-4, wherein the development of strength over time is determined by measurement at least one time, in particular multiple times, of a physical variable of the curable material, the physical variable of the curable material being measured preferably at at least one specified point in time, advantageously at more than one specified point in time, after the mixing of the curable material and/or after the exit of the curable material from the print head.

6. Method according to Claim 5, wherein, as a physical variable, the temperature, the electrical conductivity, the penetration force of a specified object at a predetermined penetration depth, the penetration depth of a specified object at a predetermined penetration force and/or the reflection of sound waves, in particular ultrasound waves, is measured on the curable material.

7. Method according to at least one of Claims 1-6, wherein the development of strength over time is determined by a penetration needle method and/or by sound measurement, in particular ultrasound measurement.

8. Method according to at least one of Claims 1-7, wherein the curable material is treated with an agent that accelerates curing and/or an agent that retards curing.

9. Method according to Claim 8, wherein the curable material is admixed in the region of the print head with a substance that accelerates curing and/or a substance that retards curing.

10. Method according to at least one of Claims 1-9, wherein the curable material comprises or consists of a mineral binder composition, in particular a hydraulic binder composition, preferably a mortar or concrete composition.

## Revendications

1. Procédé de fabrication d'un corps moulé (10) à partir d'un matériau durcissable (23) sous la forme d'une composition de liants minérale, le matériau durcissable étant appliqué en couches dans un procédé génératif à forme libre, par une tête d'impression (20) pouvant se déplacer dans au moins une direction de l'espace, et une hauteur d'une couche individuelle étant de 0,1 à 10 cm, et un taux d'application du matériau durcissable et le développement de solidité dans le temps (101, 102, 103) du matériau durcissable étant adaptés l'un à l'autre, une vitesse de déplacement de la tête d'impression étant ajustée en fonction du développement de solidité dans le temps du matériau durcissable, **caractérisé en ce que** le taux d'application du matériau durcissable est modifié lorsque le nombre de couches augmente.

2. Procédé selon la revendication 1, dans lequel le taux d'application du matériau durcissable est ajusté en fonction de, notamment proportionnellement à, la solidité du matériau durcissable à un moment défini dans le temps après la préparation du matériau durcissable et/ou après la sortie du matériau durcissable de la tête d'impression, ou inversement.

3. Procédé selon au moins l'une quelconque des revendications 1 à 2, dans lequel un temps d'attente est observé entre l'application de deux couches successives (11, 12, 13, 14) de matériau durcissable, le temps d'attente étant choisi en fonction du développement de solidité dans le temps du matériau durcissable.

4. Procédé selon au moins l'une quelconque des revendications 1 à 3, dans lequel le développement de solidité dans le temps du matériau durcissable est mesuré pendant la production générative du corps moulé, notamment plusieurs fois et/ou à intervalles temporels réguliers.

5. Procédé selon au moins l'une quelconque des revendications 1 à 4, dans lequel le développement de solidité dans le temps est déterminé par mesure au moins à une reprise, en particulier à plusieurs reprises, d'une grandeur physique du matériau durcissable, la mesure de la grandeur physique du matériau durcissable ayant de préférence lieu au moins à un moment défini dans le temps, avantageusement à plusieurs moments définis dans le temps, après la préparation du matériau durcissable et/ou après la sortie du matériau durcissable de la tête d'impression.

6. Procédé selon la revendication 5, dans lequel la température, la conductivité électrique, la force de pénétration d'un objet défini à une profondeur de pénétration prédéterminée, la profondeur de pénétration d'un objet défini à une force de pénétration prédéterminée et/ou la réflexion d'ondes sonores, notamment d'ondes ultrasonores, sur le matériau durcissable sont mesurées en tant que grandeur physique.

7. Procédé selon au moins l'une quelconque des revendications 1 à 6, dans lequel le développement de solidité dans le temps est déterminé par un procédé à aiguille de pénétration et/ou par mesure sonore, notamment mesure ultrasonore.

8. Procédé selon au moins l'une quelconque des revendications 1 à 7, dans lequel le matériau durcissable est traité avec un agent accélérant le durcissement et/ou un agent ralentissant le durcissement.

9. Procédé selon la revendication 8, dans lequel une substance accélérant le durcissement et/ou une substance ralentissant le durcissement sont ajoutées au matériau durcissable dans la zone de la tête d'impression.

10. Procédé selon au moins l'une quelconque des revendications 1 à 9, dans lequel le matériau durcissable comprend une composition de liants minérale, notamment une composition de liants hydraulique, de préférence une composition de mortier ou de béton, ou en est constitué.
